(19) Europäisches Patentamt

European Patent Office

Office européen des brevets

(11) Veröffentlichungsnummer: **0 198 260**
**B1**

(12) **EUROPÄISCHE PATENTSCHRIFT**

(45) Veröffentlichungstag der Patentschrift:
**17.11.88**

(21) Anmeldenummer: **86103782.8**

(22) Anmeldetag: **20.03.86**

(51) Int. Cl.⁴: **B 65 G 1/04**, B 65 G 47/61,
B 65 H 67/06

(54) Verfahren und Vorrichtung zum Transport und zur Lagerung von Spulen, insbesondere zur Entsorgung von Spinnautomaten oder dergleichen.

(30) Priorität: **11.04.85 DE 3513003**

(43) Veröffentlichungstag der Anmeldung:
**22.10.86 Patentblatt 86/43**

(45) Bekanntmachung des Hinweises auf die Patenterteilung:
**17.11.88 Patentblatt 88/46**

(84) Benannte Vertragsstaaten:
**AT BE CH FR GB IT LI NL SE**

(56) Entgegenhaltungen:
**EP - A - 0 026 472**
**CH - A - 634 274**
**DE - A - 3 502 611**
**GB - A - 708 033**
**US - A - 3 987 974**

(73) Patentinhaber: **DÜRKOPPWERKE GMBH,
Nikolaus-Dürkopp-Strasse 10, D-4800 Bielefeld 1 (DE)**

(72) Erfinder: **Grube, Erwin, Linnenstrasse 120,
D-4800 Bielefeld 18 (DE)**

(74) Vertreter: **Patentanwälte TER MEER - MÜLLER -
STEINMEISTER, Artur-Ladebeck-Strasse 51,
D-4800 Bielefeld 1 (DE)**

## Beschreibung

Die Erfindung betrifft ein Verfahren zum Transport und zur Lagerung von Spulen, insbesondere zur Entsorgung von Spinnautomaten oder dergleichen, bei dem die Spulen in einer geneigten Sammelrinne von einem Förderband aufgenommen und gesammelt und sodann durch Schwenken der Sammelrinne in eine waagerechte Anordnung gebracht und gruppenweise von der Sammelrinne in eine Überführungsrinne geschoben werden, sowie eine Vorrichtung zur Durchführung dieses Verfahrens.

Ein Verfahren und eine Vorrichtung zur Durchführung dieses Verfahrens dieser Art sind schon bekannt. Sie sind näher beschrieben in der jedoch nicht vorveröffentlichten Patentanmeldung DE-A-3 502 611 der Anmelderin. Bei dieser Vorrichtung rollen die fertiggestellten Spulen auf einer rinnenförmigen, geneigten Röllchenbahn von einem Förderband auf der Oberseite eines Spinnautomaten herab. Ein Teilabschnitt der Röllchenbahn ist in eine waagerechte Stellung schwenkbar, in der die angesammelten Spulen durch einen Schieber in eine in senkrechter Richtung anhebbare und absenkbare Übergaberinne überführt werden können. Die Übergaberinne kann in die Höhe der einzelnen Fächer eines Magazinwagens gebracht und um ihre Längsachse derart gekippt werden, dass die Spulen in die Fächer des Magazinwagens hineinrollen.

Diese Vorrichtung hat sich zwar als Zusatzgerät zu Spinnautomaten bewährt, ist jedoch für eine vielseitige Anwendung nicht geeignet. Magazinwagen der herkömmlichen Art erschweren einen automatisierten Transport und eine automatisierte Entnahme der Spulen.

Zur Einschränkung der Kosten der Garnherstellung sind in der Textilindustrie Spezialmaschinen mit höchster Leistungsfähigkeit eingesetzt worden, die wegen der hohen Investitionskosten im Drei-Schicht-Betrieb gefahren werden müssen. Stillstandszeiten sind daher äusserst unerwünscht. Betriebsunterbrechungen sind jedoch nach wie vor schon deshalb nicht zu vermeiden, weil noch keine Einrichtungen zu einer kontinuierlichen und weitgehend automatischen Entsorgung, also Entnahme der fertiggestellten Garnspulen, zur Verfügung stehen.

Die Automatisierung der Entsorgung wird u.a. dadurch erschwert, dass die fertiggestellten Spulen nach Grösse, Aufbau und Gewicht und darüber hinaus nach Art der verwendeten Hülsen sehr unterschiedlich sein können.

Der Erfindung liegt die Aufgabe zugrunde, ein universell einsetzbares Verfahren und eine entsprechende Vorrichtung zu schaffen, die es gestatten, mit Hilfe von einheitlichen Verfahrensschritten bzw. einer verhältnismässig geringen Anzahl von Bauelementen die Entnahme von Spulen von unterschiedlichen Herstellungsmaschinen, den Transport der Spulen zu beliebigen Zielpositionen und ggf. auch deren Lagerung durchzuführen.

Diese Aufgabe wird erfindungsgemäss bei einem Verfahren der eingangs genannten Art dadurch gelöst, dass ein verfahrbarer Förderträger, der wenigstens einen Rinnenabschnitt zur Aufnahme einer Gruppe von Spulen aufweist, in eine zu der Überführungsrinne benachbarte Position gebracht wird, dass die Überführungsrinne in eine neben und parallel zu dem Rinnenabschnitt liegende Position bewegt wird, in der die Spulen in den Rinnenabschnitt des Förderträgers überführt werden, und dass die Spulen anschliessend mit Hilfe des Förderträgers in eine gewünschte Zielposition verfahren werden.

Die erfindungsgemässe Vorrichtung unterscheidet sich von der eingangs dargestellten Vorrichtung im wesentlichen dadurch, dass als Aufnahme- und Transporteinrichtung für die Spulen verfahrbare Förderträger eines Hängeförderers vorgesehen sind und dass die Überführungsrinne um eine senkrechte Achse schwenkbar und/oder in waagerechter Richtung beweglich ist.

Da die Überführungsrinne nicht nur anhebbar und absenkbar ist, sondern auch in waagerechter Richtung bewegt werden kann, bietet sich die Möglichkeit, eine Überführung der Spulen von der Sammelrinne in den Rinnenabschnitt des Förderträgers mit nahezu beliebigem Bahnverlauf durchzuführen. Im übrigen kann die Überführungsrinne nach einem Überführungsvorgang nach oben aus möglicherweise für andere Vorgänge erforderlichen Bereichen herausbewegt werden. Sie kann als Überführungsorgan in beliebigen Positionen bei der Handhabung von Spulen eingesetzt werden.

Förderträger in der Form sogenannter Trolleys eines Hängeförderers stellen ein flexibles und äusserst vielseitig einsetzbares, raumsparendes Fördermittel dar, das lediglich an die Aufgabe der Aufnahme von Spulengruppen angepasst werden muss, in dem es mit einer oder vorzugsweise mehreren übereinanderliegenden Rinnenabschnitten versehen wird. Diese Förderträger können beliebige Transportaufgaben übernehmen und darüber hinaus zur Lagerung von Spulen eingesetzt werden.

Die Überführungsrinne ist vorzugsweise an einem beweglichen, einen senkrechten Mast aufweisenden Gestell höhenverstellbar und um eine an einem Ende der Rinne liegende senkrechte Achse schwenkbar angebracht. Das bewegliche Gestell, das beispielsweise auf Rollen läuft, gestattet einen Einsatz der Überführungsrinne in beliebigen Übergangspositionen. Ferner ist die Überführungsrinne vorzugsweise um eine zu ihrer Längsachse parallele Achse kippbar, so dass die Spulen durch Kippen der Überführungsrinne übergeben werden können. Schliesslich kann die Überführungsrinne Einrichtungen aufweisen, die Spulen in vorgegebene Längsabstände bringen, wie es bereits in der eingangs genannten Anmeldung der Anmelderin beschrieben wird.

Die Förderträger weisen in der Regel mehrere übereinanderliegende Rinnenabschnitte auf, die an ihren beiden Enden an senkrechten Rahmen des Förderträgers aufgehängt sind. Im Bereich der oberen Enden der Rahmen sind Laufrollen zur Abstützung auf Schienen eines Hängefördersystems vorgesehen. Die Rinnenabschnitte können mit senkrechten Rahmen durch waagrechte, quer zur Laufrichtung gerichtete Achsen schwenkbar verbunden sein, so dass sich der gesamte Förderträger bei Steigungen oder Gefällestrecken parallelogrammförmig verformt. Auf diese Weise bleibt die von dem Förderträger unterhalb der Laufschienen eingenommene Höhe in Steigungsbereichen im wesentlichen unverändert. Im übrigen kann der Förderträger in Bezug auf ein gesondertes Fahrwerk um eine senkrechte Achse schwenkbar ausgebildet sein.

Im folgenden werden bevorzugte Ausführungsbeispiele der Erfindung anhand der beigefügten Zeichnung näher erläutert.

Fig. 1 ist eine schematische Draufsicht auf eine Anlage mit einer Reihe von Spinnautomaten und eine erfindungsgemässe Entsorgungseinrichtung mit Hängeförderer und Überführungsrinne;

Fig. 2 zeigt in einer entsprechenden Draufsicht eine Reihe von Spinnautomaten mit Anspinnwagen;

Fig. 3 ist eine vergrösserte Teildarstellung zu Figur 1;

Fig. 4 ist eine vergrösserte Teildarstellung zu Figur 2;

Fig. 5 zeigt in einer Ansicht eine an einem Mast geführte Überführungsrinne und einen Förderträger;

Fig. 6 ist eine Seitendarstellung einer Sammelrinne eines Spinnautomaten;

Fig. 7 ist eine Ansicht eines Förderträgers mit einer Anzahl von Spulen;

Fig. 8 ist eine zugehörige Stirnansicht;

Fig. 9 zeigt den Förderträger der Figur 7 in einer Steigung;

Fig. 10 zeigt einen Förderträger mit einer Anzahl von in Querrichtung angeordneten Spulen;

Fig. 11 ist eine Ansicht eines um eine senkrechte Achse drehbaren Förderträgers;

Fig. 12 ist eine Draufsicht zu Figur 11;

Fig. 13 zeigt einen Förderträger mit Schieber zum Ausstossen von Spulen und eine Überführungsrinne;

Fig. 14 veranschaulicht die Verwendung der Überführungsrinne zwischen zwei Förderträgern;

Fig. 15 veranschaulicht die Verwendung der Überführungsrinne auf beiden Seiten eines Förderträgers;

Fig. 16 zeigt in Draufsicht eine Überführungsrinne zwischen zwei Förderträgern;

Fig. 17 veranschaulicht den Einsatz einer Überführungsrinne bei der Übergabe von einem Förderträger an eine Verarbeitungsmaschine;

Fig. 18 zeigt in Draufsicht einen Förderträger und eine Überführungsrinne, auf der die Spulen in vorgegebene Abstände gebracht worden sind;

Fig. 19 zeigt die Möglichkeit, Spulen von Hand aus einem Förderträger zu entnehmen und in vorgegebener Position abzulegen;

Fig. 20 ist eine Draufsicht auf eine Pufferstation oder ein Lager für Förderträger mit Spulen;

Fig. 21 ist eine entsprechende Darstellung einer anderen Lagerstation;

Fig. 22 zeigt eine Draufsicht einer Ausführungsform eines Spulen-Lagers;

Fig. 23 ist eine zugehörige Seitenansicht;

Fig. 24 zeigt eine Draufsicht auf eine andere Ausführungsform eines Spulenlagers;

Fig. 25 ist eine zugehörige Seitenansicht.

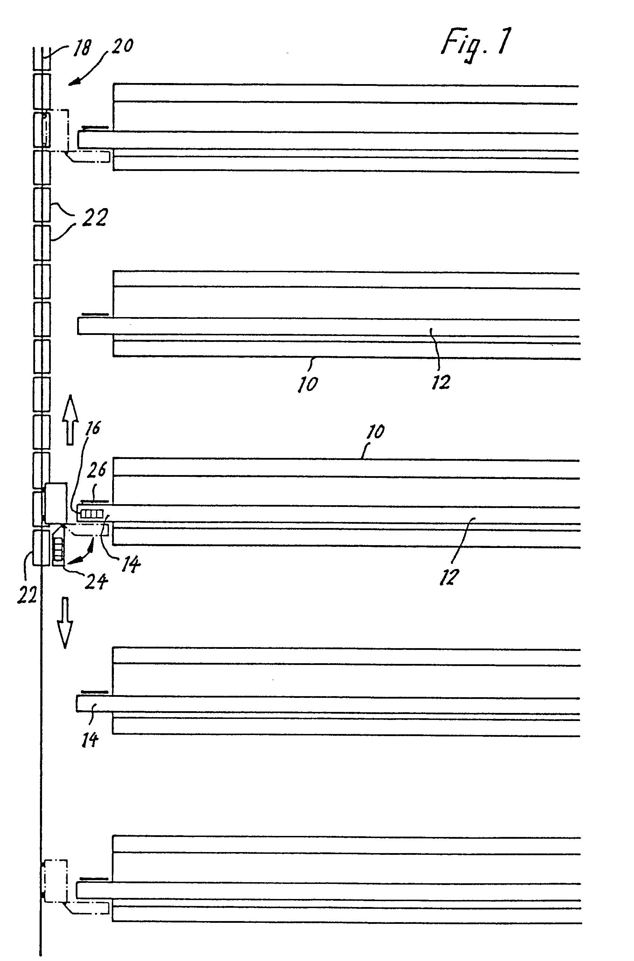

Figur 1 zeigt eine Ansicht von Spinnautomaten 10 mit einer grossen Anzahl von nicht gezeigten Spinnstationen, von denen fertiggestellte Spulen selbsttätig auf ein über die obere Seite des Spinnautomaten verlaufendes Förderband 12 abgegeben werden. Dieses Förderband verläuft zu dem in Figur 1 links gezeigten Ende des Spinnautomaten und leitet dort in eine Sammelrinne 14 über, die nach links in Figur 1 abwärts geneigt ist, so dass die eintreffenden Spulen 16 jeweils zum linken Ende herabgleiten und dort gesammelt werden.

Entlang der Stirnseiten des Spinnautomaten 10 verläuft eine Schiene 18 eines Hängeförderers 20. Auf der Schiene 18 ist gemäss Figur 1 eine Anzahl von Förderträgern 22 bereitgestellt worden. In Figur 1 ist in mittlerer Höhe zwischen der Schiene 18 des Hängeförderers und einem der Spinnautomaten 10 eine Überführungsrinne 24 gezeigt, die zwischen der strichpunktiert dargestellten und der in durchgezogenen Linien gezeigten Stellung schwenkbar ist. In der strichtpunktierten Stellung liegt die Überführungsrinne 24 seitlich neben der Sammelrinne 14, so dass die Spulen 16 mit Hilfe eines Schiebers 26 auf die Überführungsrinne hinübergeschoben werden können. Vorab wird die Sammelrinne 14 in eine waagrechte Stellung geschwenkt, wie später erläutert werden soll. In der in durchgezogenen Linien gezeigten Position der Überführungsrinne 24 liegt diese seitlich neben einem der Förderträger 22, so dass die Spulen 16, etwa durch seitliches Kippen der Überführungsrinne 24, auf den Förderträger 22 überführt werden können, wie ebenfalls später erläutert werden soll.

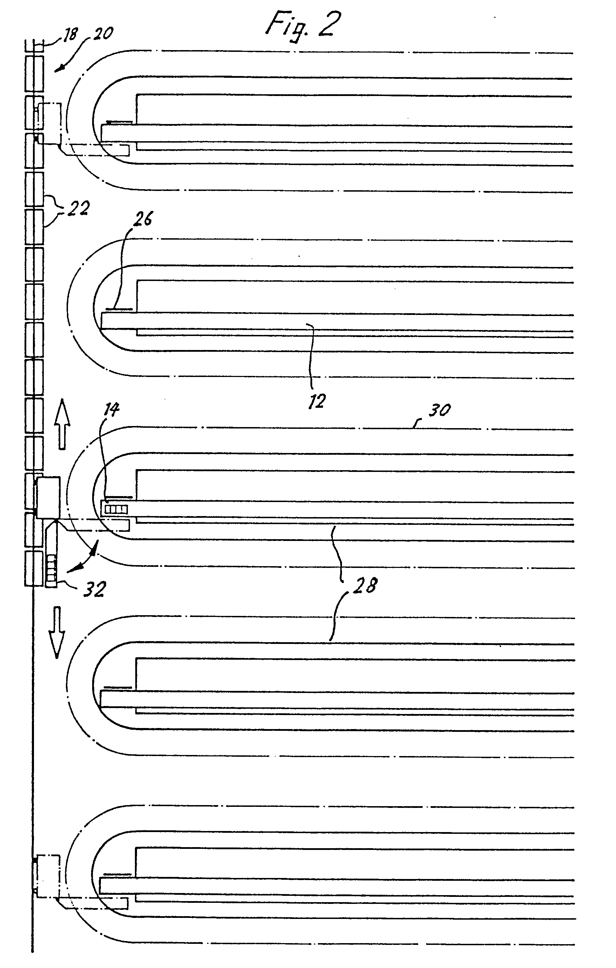

Figur 2 zeigt eine Anzahl von Spinnautomaten 28, die im wesentlichen den zuvor genannten Spinnautomaten 10 entsprechen, jedoch mit einem nicht gezeigten Anspinnwagen versehen sind, der entlang beiden Seiten des Spinnautomaten verfahrbar ist und bei dieser Bewegung mit seinen Aussenkonturen die strichpunktiert dargestellte Bahn 30 beschreibt. Mit Rücksicht auf diese Bewegung des Anspinnwagens ist die in diesem Falle mit 32 bezeichnete Überführungsrinne länger ausgebildet, so dass sie in der in durchgezogenen Linien gezeigten Position angrenzend an einen der Förderträger die Bewegung des Anspinnwagens nicht behindert, jedoch über dessen Bahn hinweg bis neben die Sammelrinne 14 geschwenkt werden kann.

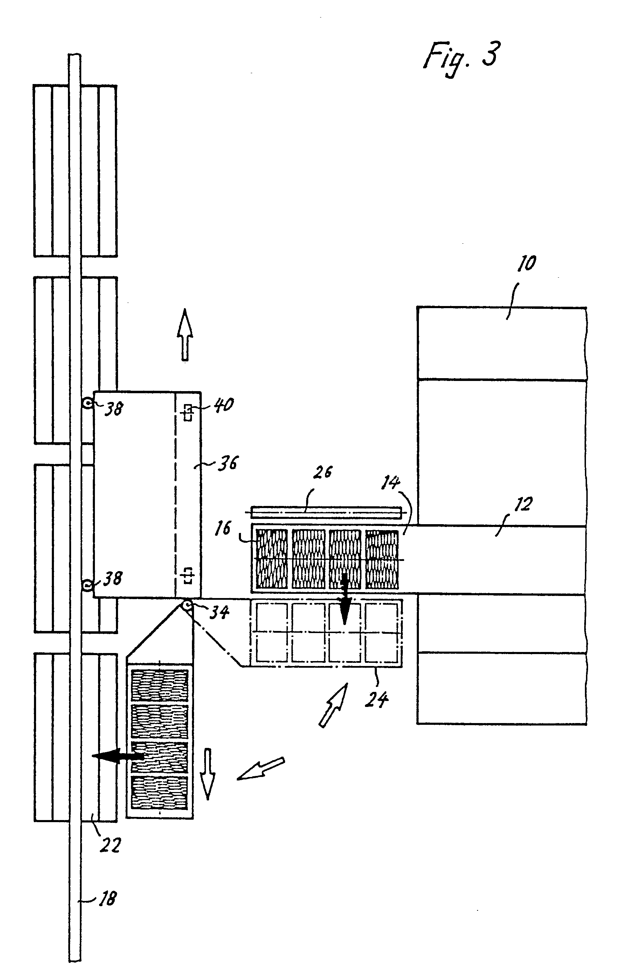

Figur 3 ist eine vergrösserte Teildraufsicht zu Figur 1, so dass im wesentlichen die selben Bezugsziffern verwendet werden können und eine eingehende Erläuterung nicht erforderlich ist. Die Überführungsrinne 24 ist in der Nähe eines ihrer Enden an einer senkrechten Achse 34 schwenkbar gelagert. Diese Achse 34 ist an einem beweglichen Gestell 36 befestigt, das sich im dargestellten Beispiel mit oberen Rollen 38 mit senkrechter Drehachse und unteren Rollen 40 mit waagrechter Drehachse an nicht gezeigten Schienen abstützt und auf diesen beweglich ist.

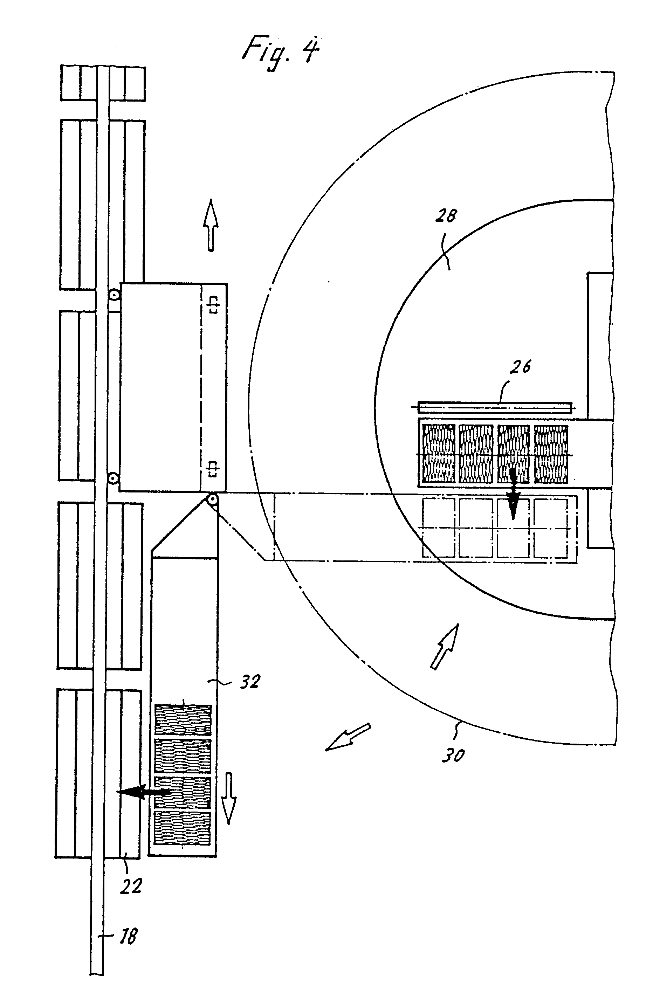

Figur 4 ist eine entsprechende Teildarstellung zu Figur 2 und zeigt die verlängerte Überführungsrinne 32 sowie die Bahn 30 des Anspinnwagens.

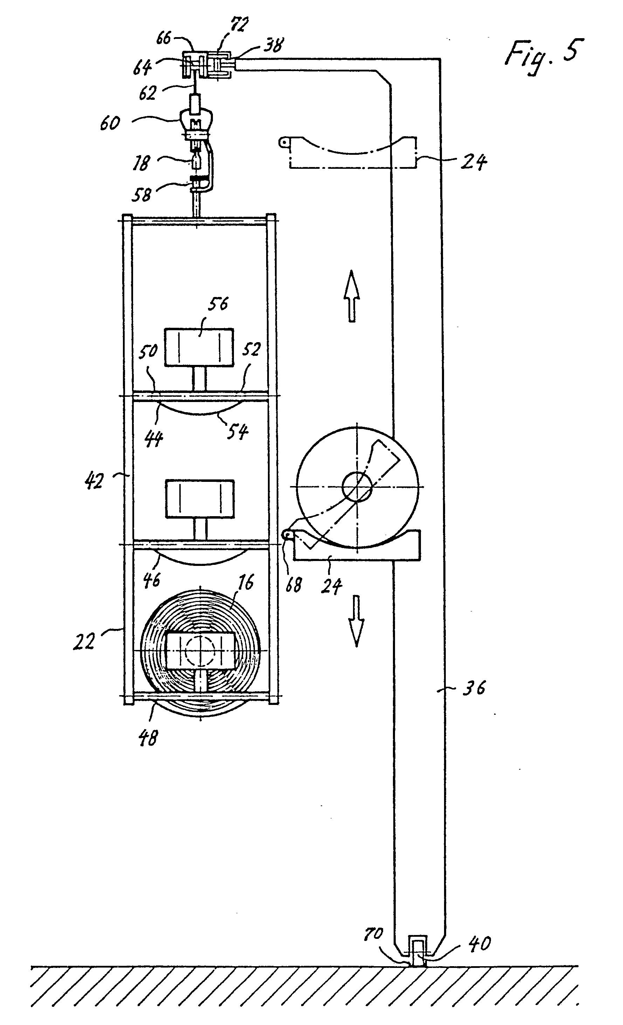

In Figur 5 ist eine schematische Seitenansicht eines Förderträgers 22 sowie des Gestells 36 mit Überführungsrinne 24 gezeigt. Der Förderträger 22 weist senkrechte, leiterförmige, vordere und hintere Rahmen 42 auf, die im dargestellten Beispiel drei übereinanderliegende Rinnenabschnitte 44, 46, 48 für Spulen 16 tragen. Die Rinnenabschnitte werden im dargestellten Beispiel gebildet durch zwei seitliche, längsgerichtete Stangen 50, 52 zwischen den beiden stirnseitigen Rahmen 42 sowie ein zwischen den Stangen 50, 52 durchhängend aufgespanntes Tuch 54, das die Aufnahmen von Spulen unterschiedlicher Abmessungen ermöglicht. Verstellbare Halteplatten 56 verhindern ein Verrutschen der Spulen in Längsrichtung der Rinnenabschnitte 44, 46, 48.

An der Oberseite der Rahmen 43 sind Rollenhalter 58 befestigt, die drehbare Rollen 60 tragen, die auf den Schienen 18 laufen. Von den Rollenhaltern 58 geht nach oben eine Klinke 62 aus, die mit einer Schleppkette 64 in Eingriff gebracht werden kann, die in einer Führung 66 bewegt wird.

Die Überführungsrinne 24 ist an dem senkrechten Gestell 36 in senkrechter Richtung verfahrbar, wie durch die nicht bezeichneten Pfeile in Figur 5 angedeutet wird. Auf diese Weise kann die Überführungsrinne 24 einerseits in die Höhe der Sammelrinne 14 und andererseits in die Höhe der Rinnenabschnitte 44, 46, 48 des Förderträgers 22 gebracht werden. Die Überführungsrinne kann ferner in die im oberen Bereich von Figur 5 strichpunktiert angedeutete Ruhestellung angehoben werden, so dass Behinderungen der Bewegung der pendelnd aufgehängten Förderträger 22 sowie Verletzungen des Bedienungspersonals durch Quetschungen zwischen dem Förderträger und der Überführungsrinne ausgeschlossen werden. Die Überführungsrinne 24 weist im übrigen an einem seitlichen Rand eine zu ihrer Längsrichtung parallele Kippachse 68 auf, so dass die Überführungsrinne 24 in die in Figur 5 strichpunktiert dargestellte Stellung gekippt werden kann, in der die Spulen abgegeben werden und in den zugehörigen Rinnenabschnitt 46 des Förderträgers hineinrollen. In diesem Falle können der Förderträger 22 und die Überführungsrinne 24 in nicht gezeigter Weise gekoppelt sein, so dass der Förderträger 22 bei der Überführungsbewegung nicht seitlich ausweicht.

Aus Figur 5 geht im übrigen hervor, dass das Gestell 36 durch die unteren Rollen 40 in Schienen 70 am Boden und durch Schienen 72 im oberen Bereich geführt ist.

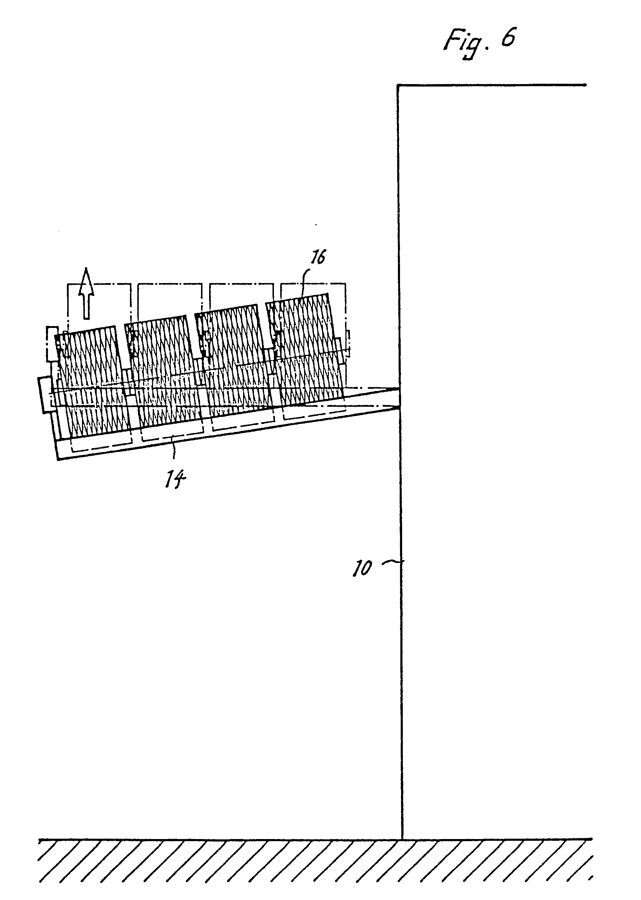

Figur 6 dient zur Erläuterung der Sammelrinne 14 an dem Spinnautomaten 10. Diese Sammelrinne 14, etwa eine rinnenförmige Röllchenbahn, ist abwärts geneigt, so dass die Spulen 16 jeweils bis zum linken Ende gleiten und gegeneinander anliegend gesammelt werden, wie es in Figur 6 am Beispiel von vier Spulen gezeigt ist. Die Sammelrinne 14 kann in die strichpunktiert gezeigte, waagerechte Stellung angehoben werden, so dass die Übergabe auf die Überführungsrinne 24 bzw. 32 erfolgen kann.

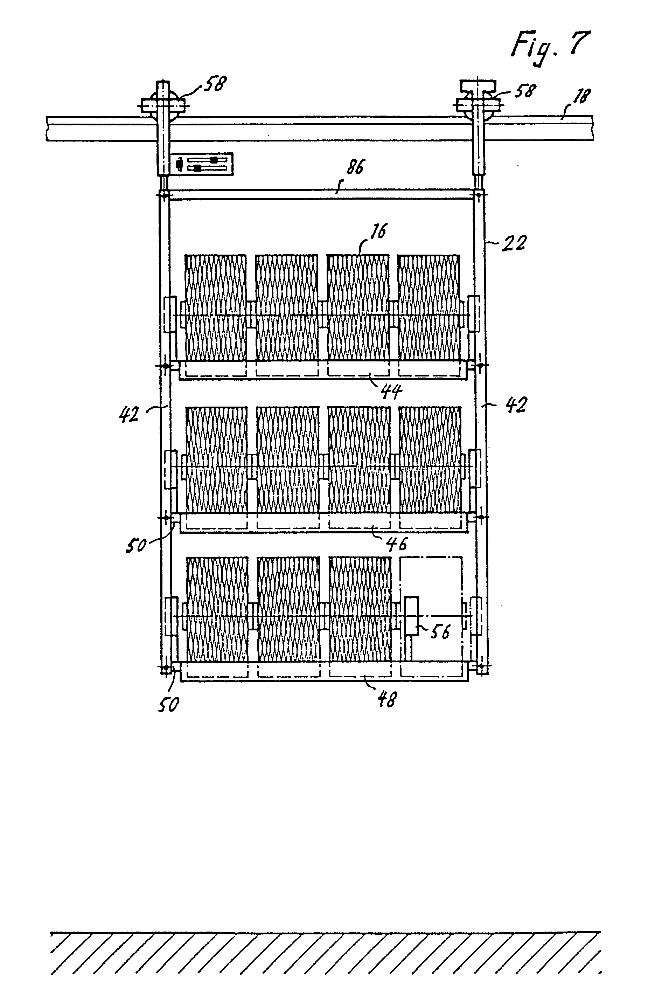

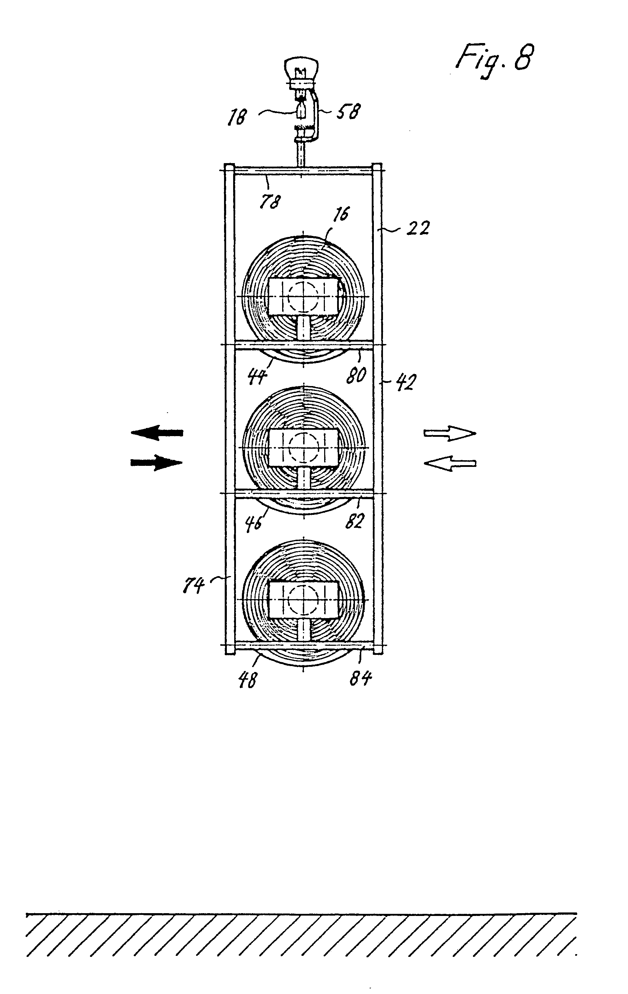

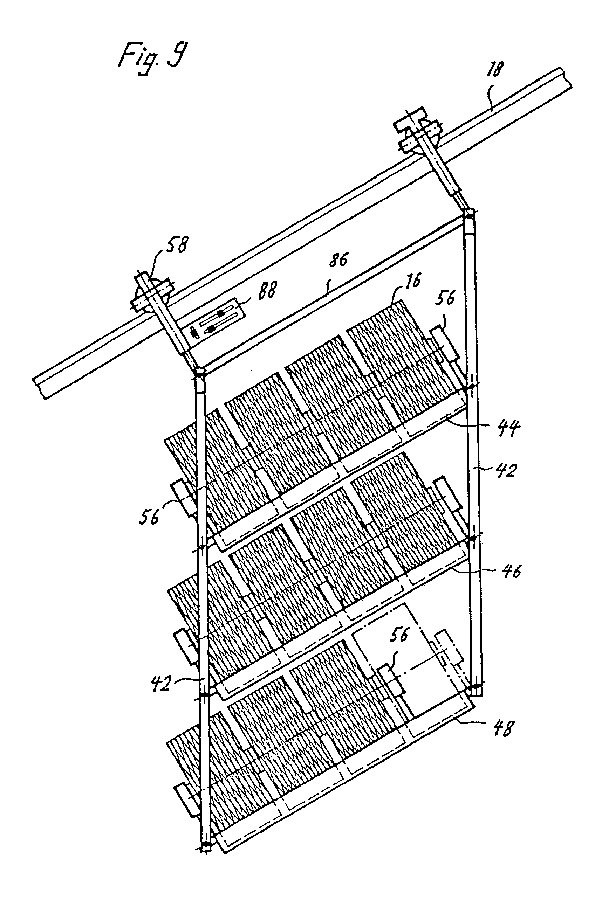

Figuren 7 und 8 zeigen einen mit Spulen gefüllten Förderträger 22 in zwei zueinander senkrechen Ansichten. Zur Erläuterung kann weitgehend auf die Ausführungen zu Figur 5 Bezug genommen werden. Die beiden leiterförmigen Rahmen 42 an den Stirnseiten des Förderträgers weisen senkrechte Streben 74, 76 und Quersprossen 78, 80, 82, 84. Die senkrechten Streben 74, 76 sind an ihren oberen Enden durch eine Längsstrebe 86 miteinander verbunden. Bei dem in Figuren 7 bis 9 gezeigten Ausführungsbeispiel soll davon ausgegangen werden, dass die senkrechten Streben 74, 76 mit den Querstreben 78, 80, 82, 84 bzw. der Längsstrebe 86 in nicht bezeichneten waagerechten Querachsen gelenkig verbunden sind, so dass der Förderträger auf Steigungen und Gefällstrecken die in Figur 9 veranschaulichte parallelogrammartige Form einnimmt. Diese Verformung des Förderträgers führt zu einer Verringerung der unterhalb der Schienen 18 benötigten freien Höhe. Die Spulen 16 werden in Steigungsbereichen durch die bereits erwähnten Halteplatten 56 an den Stirnseiten festgehalten.

Einer der Rollenhalter 58 gemäss Figur 1 trägt eine Kodierungsplatte 88, auf der beispielsweise ein automatisch ablesbarer Code für eine bestimmte Zielstation eingestellt werden kann.

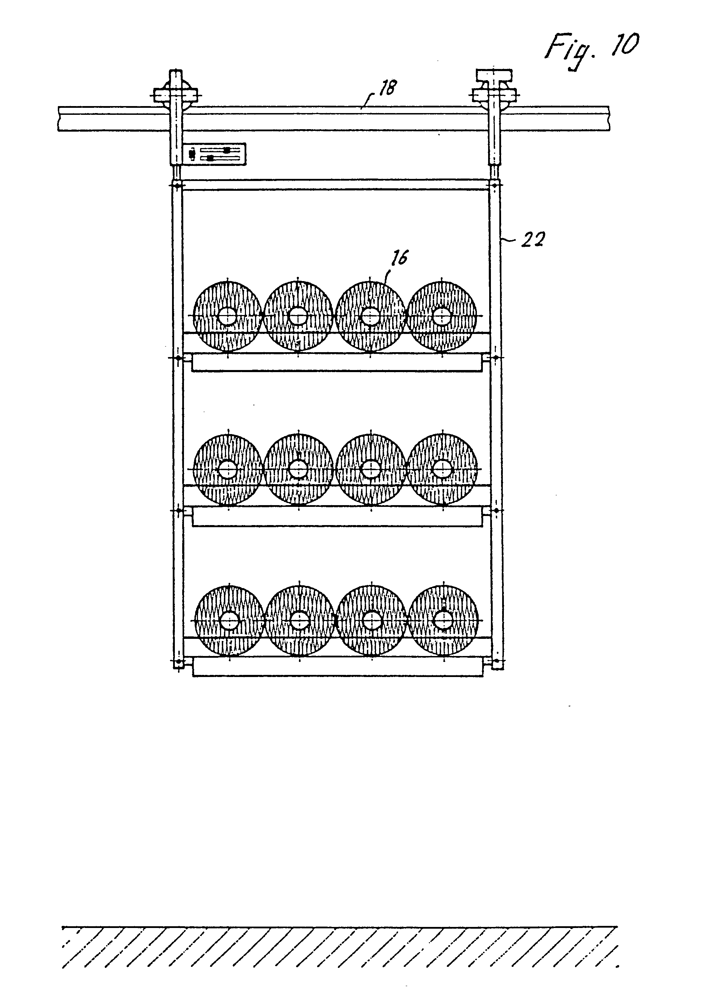

Figur 10 entspricht weitgehend Figur 7 und soll daher nicht im einzelnen erläutert werden, veranschaulicht jedoch die Anordnung von Spulen 16 mit quer gerichteten Spulenachsen.

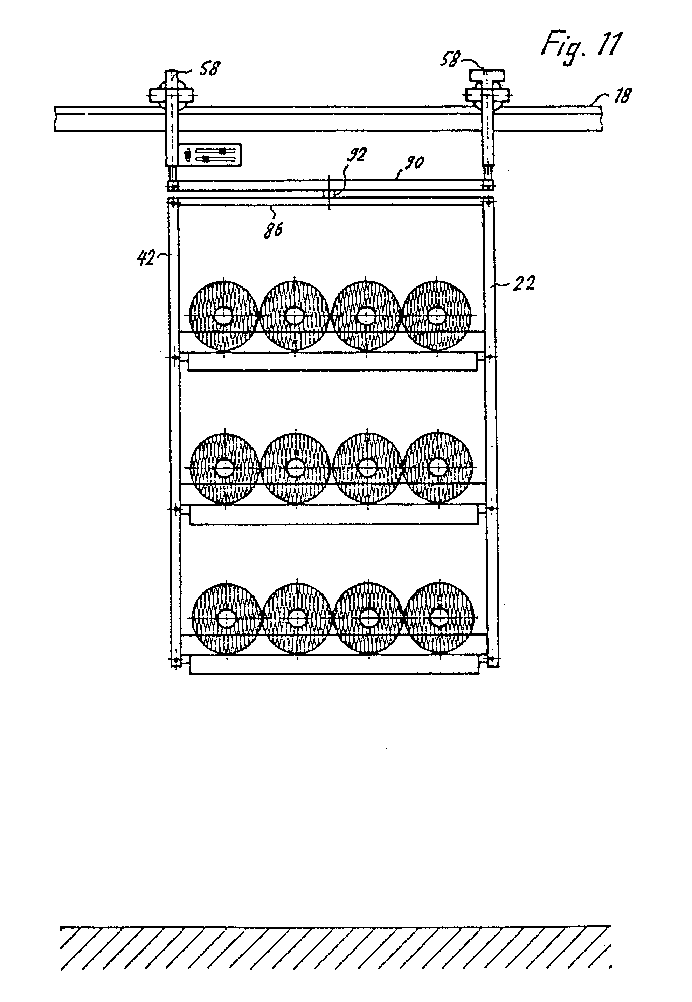

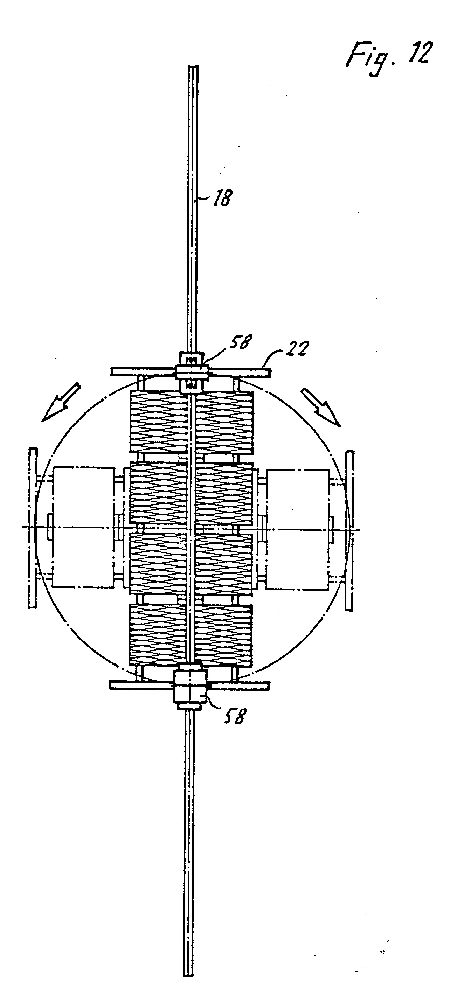

Gemäss Figur 11 sind die Rollenhalter 58 durch eine gesonderte Längsstrebe 90 miteinander verbunden, und die Längsstrebe 90 steht in ihrem Mittelbereich über eine senkrechte Achse 92 mit der Längsstrebe 86 am oberen Ende der Rahmen 42 in Verbindung. Auf diese Weise kann der untere Teil des Förderträgers um eine senkrechte Achse gedreht werden, wie es in Figur 12 veranschaulicht ist. Dies ermöglicht eine zusätzliche Anpassung an unterschiedliche Entnahme- oder Beladungsrichtungen.

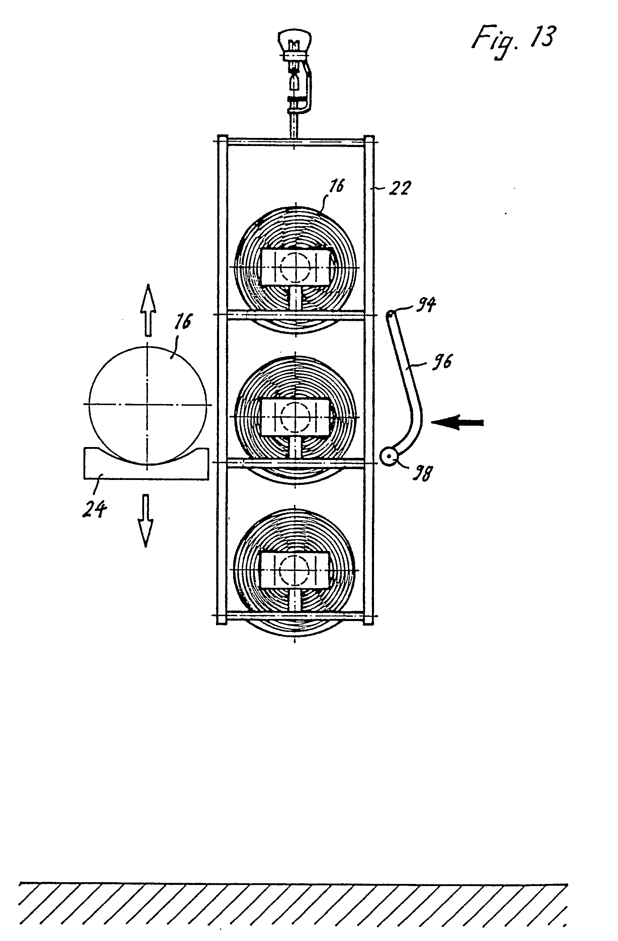

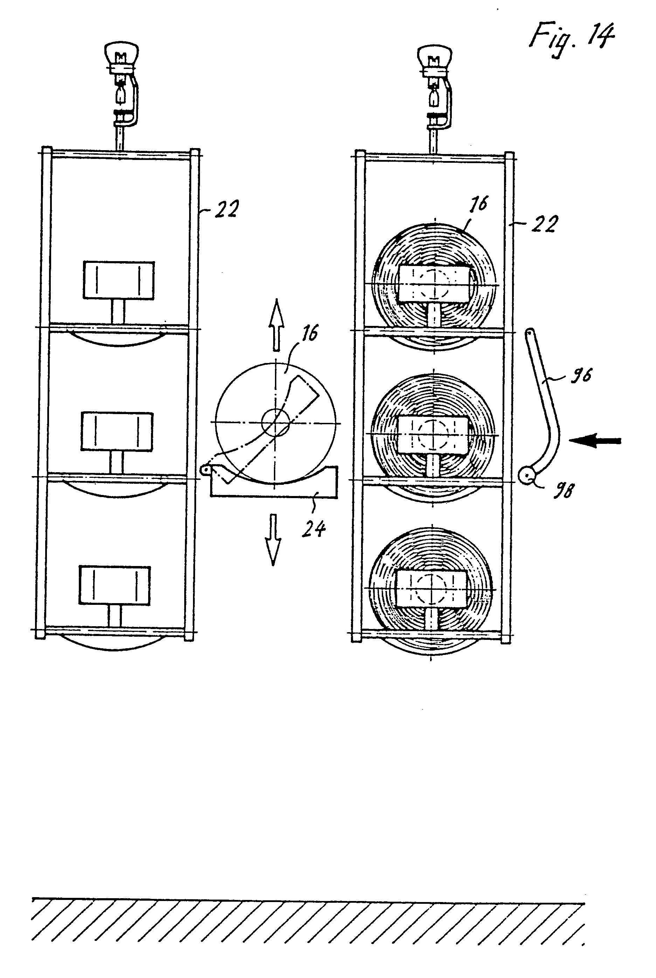

Figur 13 zeigt in einer Position seitlich eines Förderträgers 22 einen um eine Achse 94 an Hebeln 96 schwenkbaren Schieber 98, mit dem Spulen 16 auf dem Förderträger 22 hinaus etwa auf eine links in Figur 13 gezeigte Überführungsrinne geschoben werden können. Gemäss Figur 14 kann die Überführungsrinne 24 zwischen zwei Förderträgern 22 vorgesehen sein und dazu dienen, Spulen 16 von dem ersten zu dem zweiten Förderträger zu überführen. Durch Anheben und Absenken der Überführungsrinne 24 und durch Verfahren des aufnehmenden Förderträgers auf den zugehörigen Schienen ermöglicht es diese Anordnung, unterschiedliche Spulen gruppenweise zu sortieren.

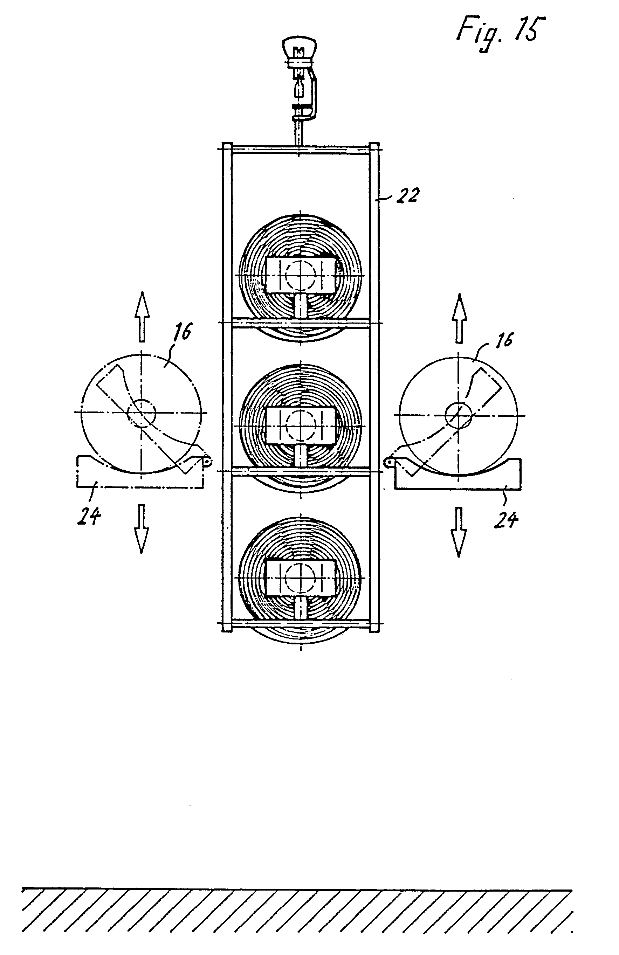

Aus Figur 15 geht hervor, dass ein Förderträger 22 gleichermassen von beiden Seiten her mit Hilfe von Überführungsrinnen 24 mit Spulen 16 beladen werden kann.

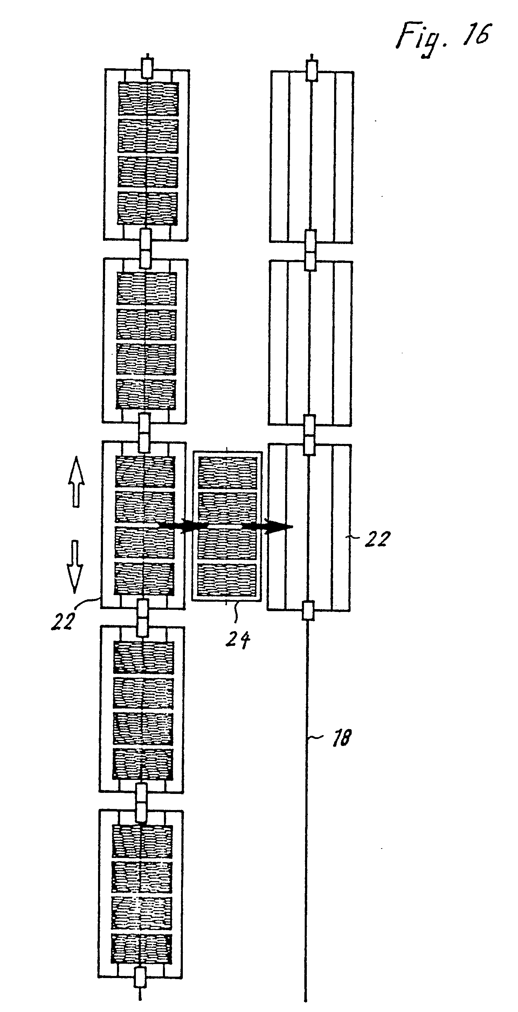

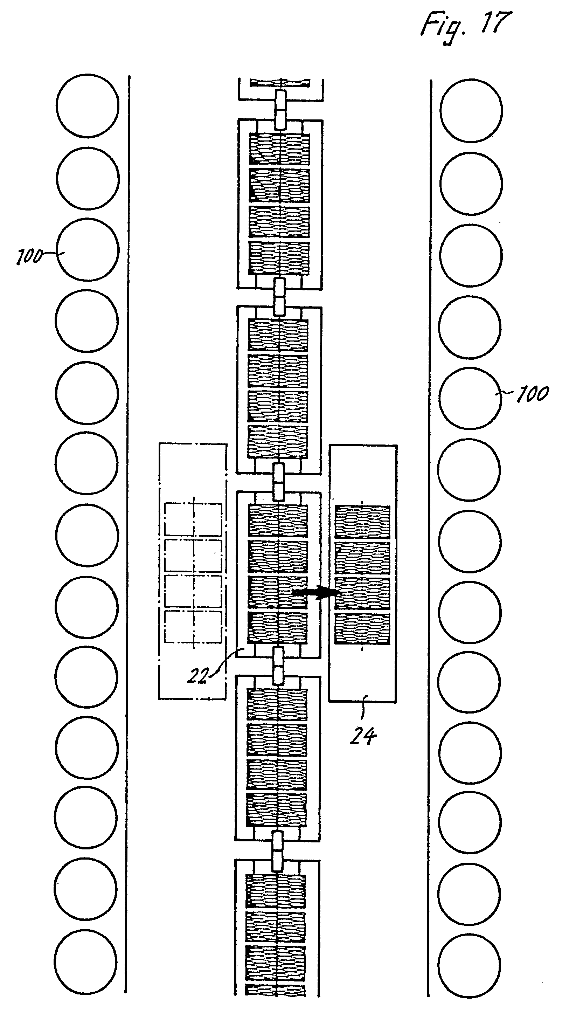

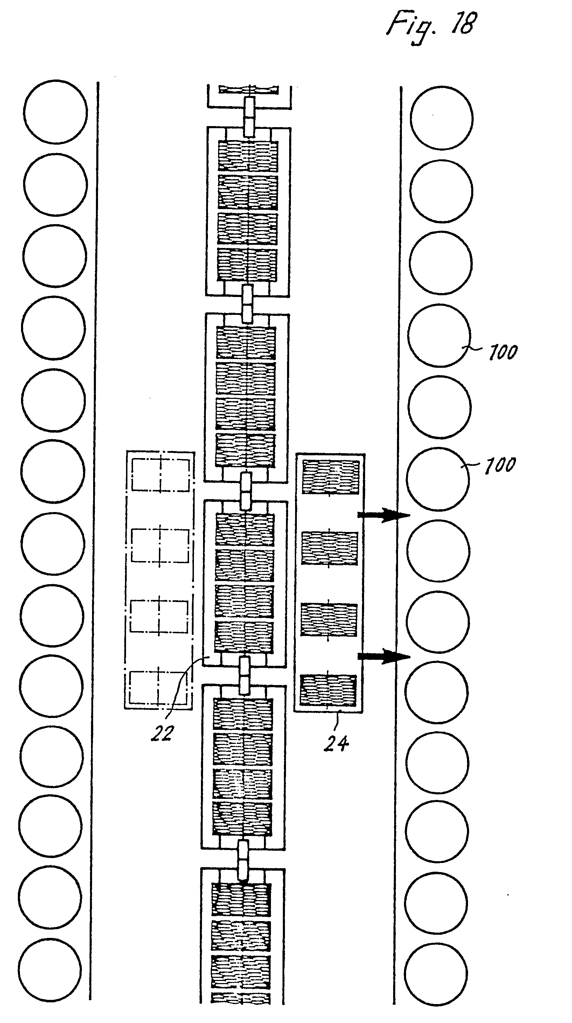

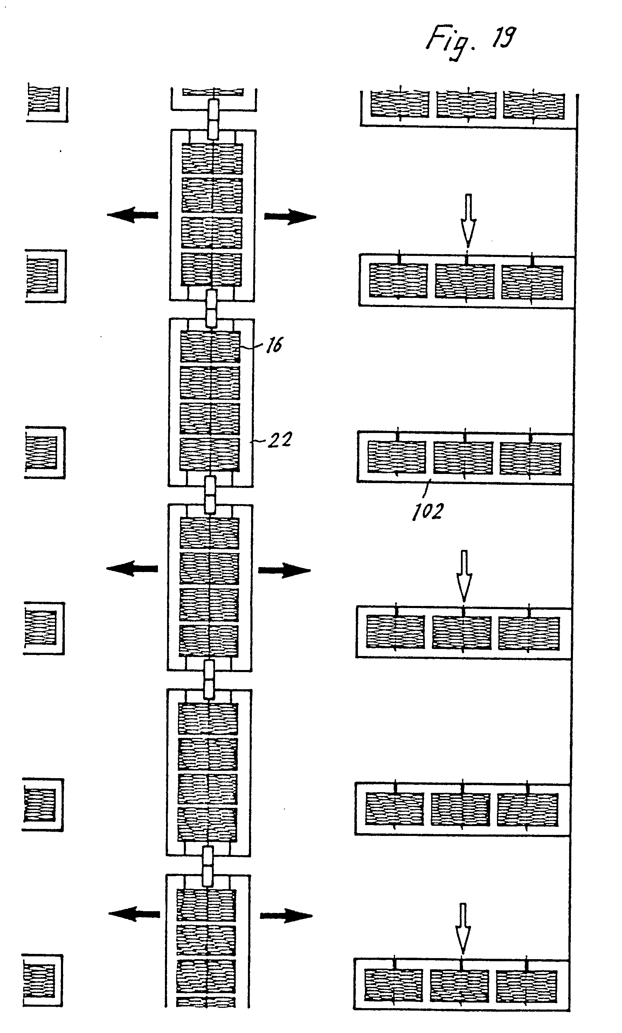

Figur 16 stellt im wesentlichen eine Draufsicht zu Figur 14 dar und zeigt demnach das Überführen von Spulen zwischen zwei Hängeförderer-Zügen mit Hilfe einer Überführungsrinne 24. Gemäss Figur 17 und 18 werden Spulen 16 von einem Förderträger 22 auf eine Überführungsrinne 24 übernommen und auf dieser in geeignete Längsabstände für eine Anzahl von nachgeschalteten Verarbeitungsstationen 100 gebracht. Gemäss Figur 19 können Spulen 16 auch von Hand auf den Förderträgern 22 entnommen und in Verarbeitungsstationen 102 eingelegt werden. Bei einem in üblicher Höhe geführten Hängeförderer und beispielsweise übereinanderliegenden Rinnenabschnitten in einem Förderträger befinden sich alle Spulen in einer günstigen Griffhöhe für eine mit der Entnahme beschäftigte Person.

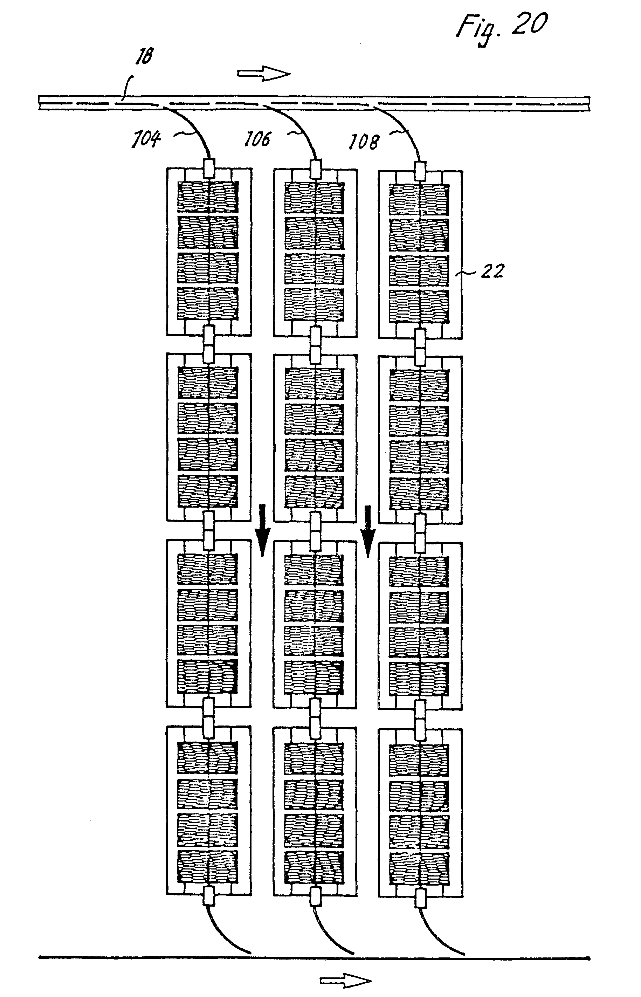

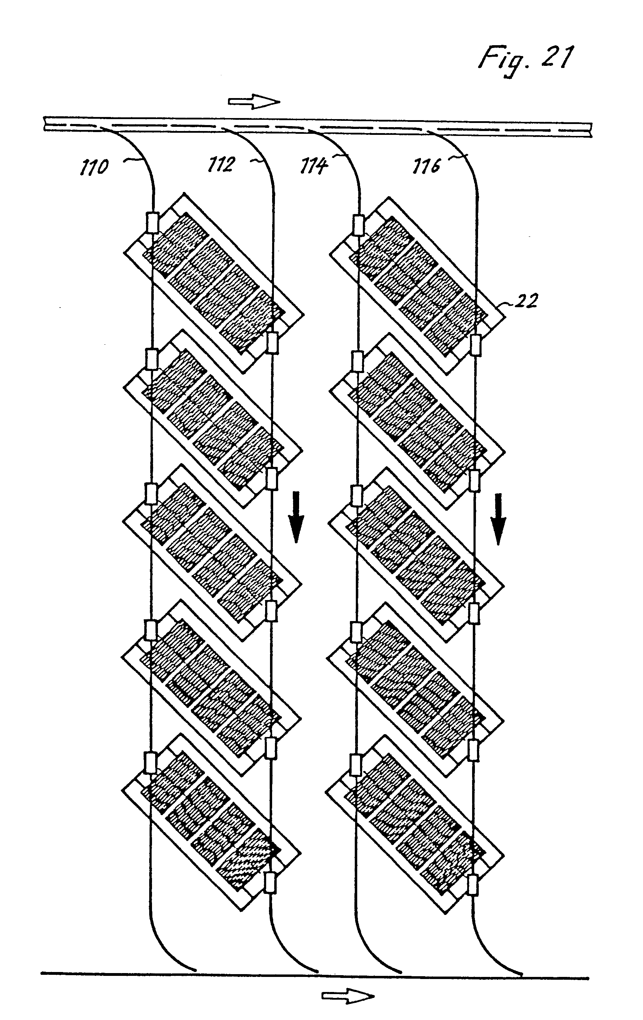

Gemäss Figur 20 können die Förderträger von einer Schiene 18 auf abzweigende Speicherschienen 104, 106, 108 umgeleitet werden, so dass auf diese Weise ein Zwischenspeicher oder Puffer für Spulen gebildet wird. In dem in Figur 20 gezeigten Beispiel laufen die Förderträger 22 in üblicher Weise in die parallel nebeneinanderliegenden Speicherschienen 104, 106, 108 ein, während gemäss Figur 21 die vorderen und hinteren Rollen der Förderträger 22 auf unterschiedliche, parallele Speicherschienen 110, 112, 114, 116 gelangen und sich damit in einer in Figur 21 in Draufsicht veranschaulichten, diagonal versetzten Stellung befinden, durch die unter Umständen eine höhere Speicherkapazität erreicht werden kann.

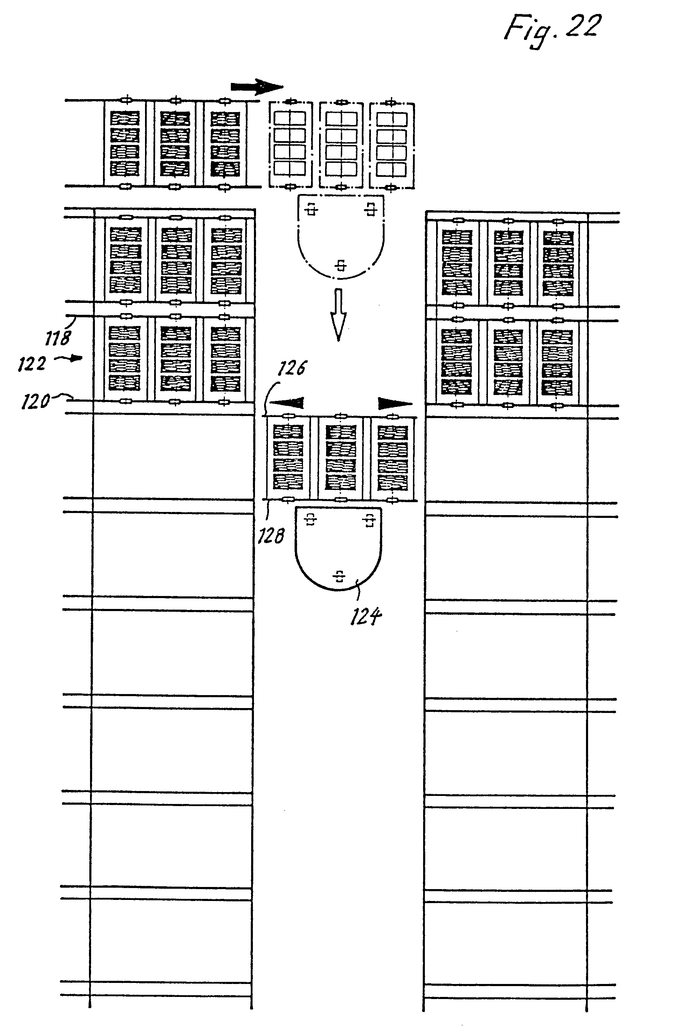

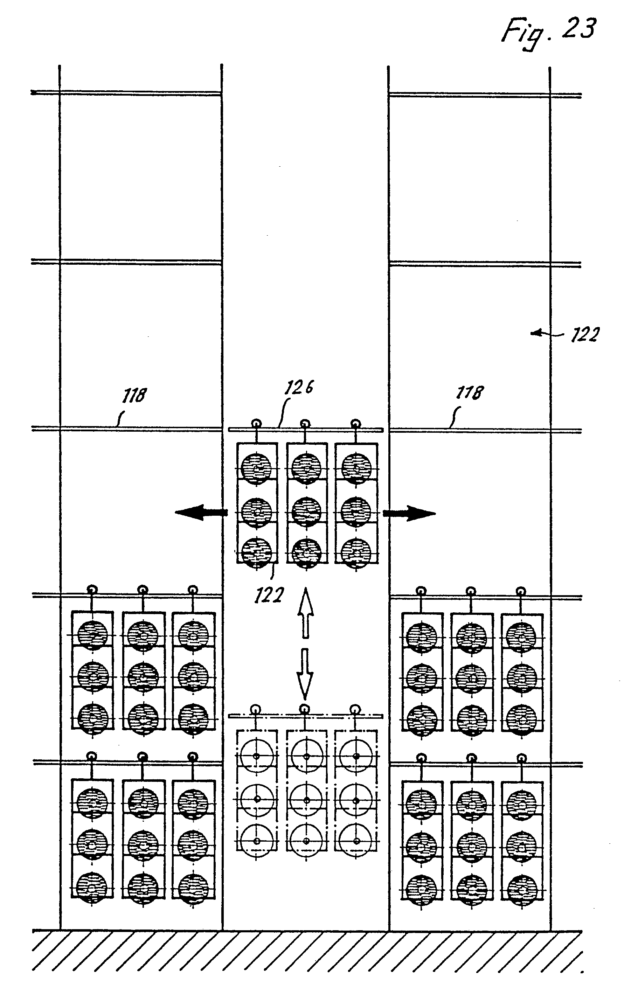

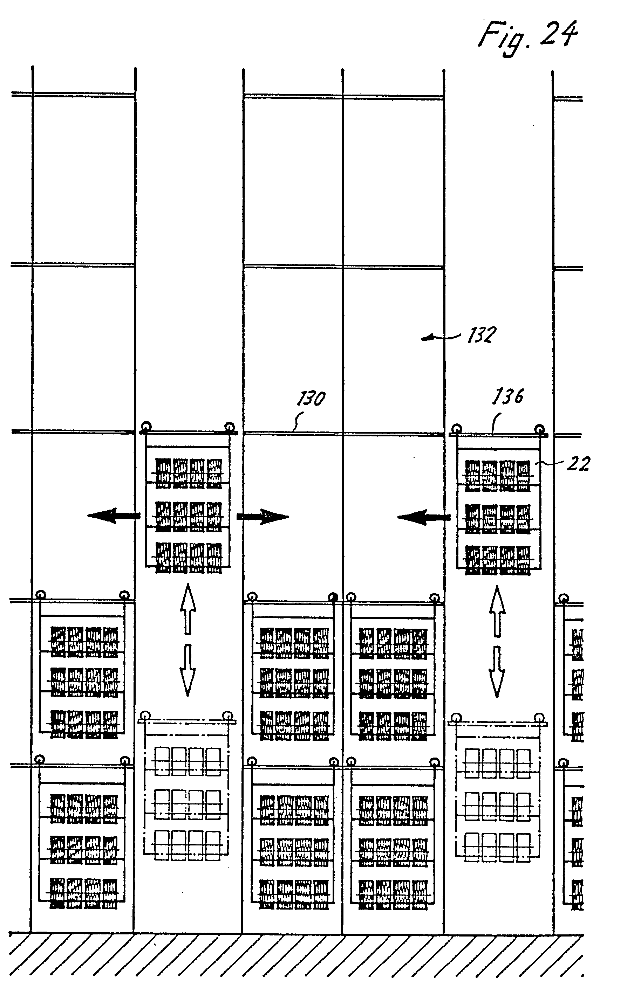

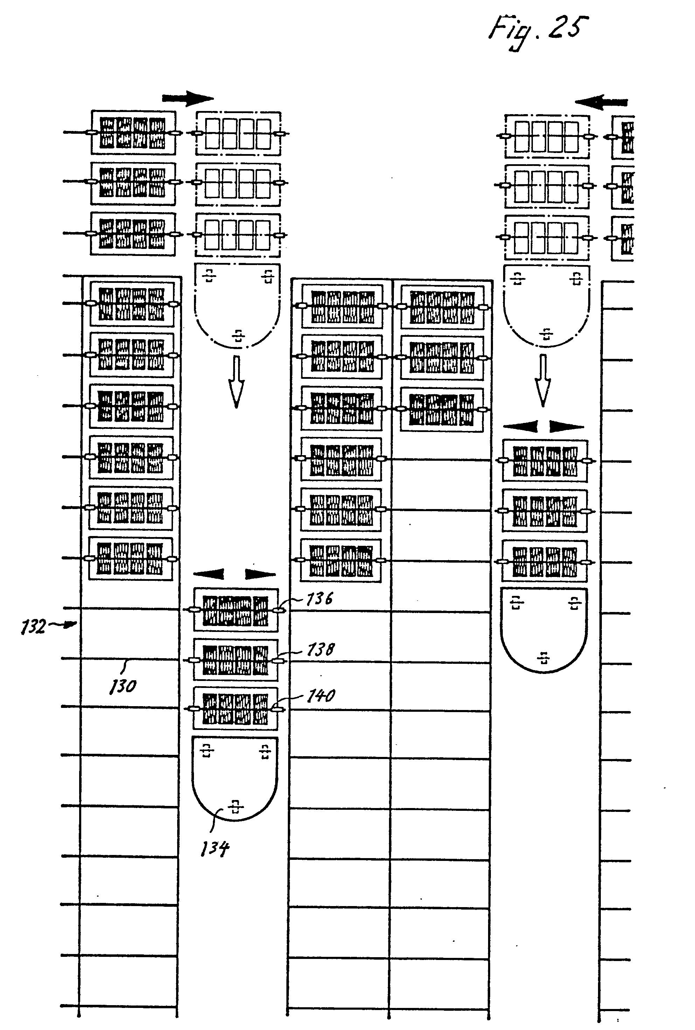

Figuren 22 und 23 veranschaulichen ein regalförmiges Lager für mit Spulen gefüllte Förderträger, die in diesem Falle mit quergestellten vorderen und hinteren Rollen auf parallele Schienen 118, 120 einzelner Regalfächer 122 gefahren werden können. Diese Art der Lagerung setzt voraus, dass die Rollen der Förderträger um senkrechte Achsen drehbar sind. Zum Einbringen der Förderträger 22 in die Regalfächer 122 können Wagen 124 mit einer entsprechenden, zwei Schienen 126, 128 aufweisenden, anhebbaren und absenkbaren Halterung vorgesehen sein. Dabei kann es sich beispielsweise um entsprechend umgerüstete Gabelstapler handeln. Figuren 24 und 25 zeigt eine ähnliche Lösung, jedoch laufen in diesem Falle die Förderträger 22 in ihrer üblichen Fahrtrichtung auf Schienen 130 in den einzelnen Regalfächern 132. Wagen 134 weisen eine Halterung mit einer Anzahl von Schienen 136, 138 140 zur Aufnahme jeweils eines Förderträgers 22 auf.

Aus der vorstehenden Beschreibung geht hervor, dass sich die Erfindung mit Hilfe verhältnismässig weniger, einheitlicher Elemente ein Baukastensystem geschaffen wird, mit dessen Hilfe alle bei der Aufnahme, dem Transport, der Weitergabe und der Lagerung von Spulen anfallenden Aufgaben gelöst werden können. Durch die Möglichkeit der gleichzeitigen Aufnahme mehrerer Spulen bei der Entsorgung von Garnherstellungsmaschinen und der über das gesamte System forgesetzten Übergabe von jeweils mehreren Spulen ergibt sich eine hohe Arbeitsgeschwindigkeit des Systems. Der gesamte Verfahrensablauf ist weitgehend automatisiert. Durch einander zeitlich überschneidende Arbeitsschritte beim Sammeln der Spulen auf einem Spinnautomaten, Übergeben auf die Überführungsrinne und Weitergabe auf die Förderträger werden Verzögerungen bei der Entsorgung vermieden.

Die Spulen sind in den Förderträgern von beiden Seiten her für den Einsatz von Handhabungsgeräten oder auch bei manueller Ent- oder Beladung gut zugänglich. Ein Zusammenwirken mit vorhandenen oder an einen bestimmten Anwendungszweck gebundenen Handhabungs- und/oder Robotereinrichtungen, Kontrollvorrichtungen und Verpackungsautomaten ist daher ohne weiteres möglich.

## Patentansprüche

1. Verfahren zum Transport und zur Lagerung von Spulen, insbesondere zur Entsorgung von Spinnautomaten oder dergleichen, bei dem die Spulen in einer geneigten Sammelrinne (14) von einem Förderband (12) aufgenommen und gesammelt und sodann durch Schwenken der Sammelrinne in eine waagerechte Anordnung gebracht und gruppenweise von der Sammelrinne in eine Überführungsrinne (24, 32) geschoben werden, dadurch gekennzeichnet, dass ein verfahrbarer Förderträger (22), der wenigstens einen Rinnenabschnitt (44, 46, 48) zur Aufnahme einer Gruppe von Spulen aufweist, in eine zu der Überführungsrinne (24, 32) benachbarte Position gebracht wird, dass die Überführungsrinne in eine neben und parallel zu dem Rinnenabschnitt liegende Position bewegt wird, in der die Spulen in den Rinnenabschnitt des Förderträgers geführt werden, und dass die Spulen anschliessend mit Hilfe des Förderträgers in eine gewünschte Zielposition verfahren werden.

2. Vorrichtung zur Durchführung des Verfahrens gemäss Anspruch 1, mit einer geneigten, in eine waagerechte Stellung schwenkbaren Sammelrinne (14) zur Aufnahme von Spulen (16) von einem Spinnautomaten oder dergleichen und einer anhebbaren und absenkbaren Überführungsrinne (24, 32) zur Überführung der Spulen von der Sammelrinne in eine Aufnahme- und Transporteinrichtung, dadurch gekennzeichnet, dass als Aufnahme- und Transporteinrichtung verfahrbare Förderträger (22) eines Hängeförderers vorgesehen sind und dass die Überführungsrinne (24, 32) um eine senkrechte Achse (34) schwenkbar und/oder in waagrechter Richtung beweglich ist.

3. Vorrichtung nach Anspruch 2, dadurch gekennzeichnet, dass die Überführungsrinne (24, 32) an einem beweglichen, einen senkrechen Mast aufweisenden Gestell (36) höhenverstellbar und um eine an einem Ende der Rinne liegende senkrechte Achse (34) schwenkbar angebracht ist.

4. Vorrichtung nach Anspruch 2 oder 3, dadurch gekennzeichnet, dass die Überführungsrinne (24, 32) um eine parallel zu ihrer Längsrichtung verlaufenden Achse (68) kippbar ist.

5. Vorrichtung nach einem der Ansprüche 2 bis 4, dadurch gekennzeichnet, dass die Überführungsrinne (24, 32) Einrichtungen zur Längsverschiebung der Spulen zur Erzielung vorgegebener Spulenabstände aufweist.

6. Vorrichtung nach einem der Ansprüche 2 bis 5, dadurch gekennzeichnet, dass die Förderträger (22) mehrere in deren Längsrichtung verlaufende, übereinander liegende Rinnenabschnitte (44, 46, 48) aufweisen, die an ihren Enden an senkrechten Rahmen (42) aufgehängt sind.

7. Vorrichtung nach Anspruch 6, dadurch gekennzeichnet, dass die vorderen und hinteren Rahmen (42) der Förderträger (22) an ihren oberen Enden mit Laufrollen (60) zur Abstützung auf Schienen (18) eines Hängefördersystems verbunden sind.

8. Vorrichtung nach Anspruch 7, dadurch gekennzeichnet, dass die Rinnenabschnitte (44, 46, 48) mit den senkrechten Rahmen (42) durch waagerechte, quer zur Laufrichtung gerichtete Achsen schwenkbar verbunden sind und an den Enden verstellbare Halteplatten (56) aufweisen.

9. Vorrichtung nach einem der Ansprüche 6 bis 8, dadurch gekennzeichnet, dass die Rinnenabschnitte (44, 46, 48) durch seitliche Stangen (50, 52) und zwischen diesen durchhängend angeordnete Tücher (54) gebildet sind.

10. Vorrichtung nach einem der Ansprüche 7 bis 9, dadurch gekennzeichnet, dass zwischen den Laufrollen (60) einerseits und den oberen Enden der senkrechten Rahmen (42) andererseits Längsträger (86, 90) angeordnet sind, die in ihrem Mittelbereich durch eine senkrechte Achse (92) drehbar verbunden sind.

## Claims

1. A method for the transporting and storage of yarn packages, especially for discharging automatic spinning machines or the like, in which the packages are taken up and collected in an inclined collecting channel (14) by a conveyor belt (12) and then brought by pivoting of the collecting channel into a horizontal arrangement and pushed by groups from the collecting channel into a transfer channel (24, 32), characterised in that a mobile conveyor carrier (22), having at least one channel section (44, 46, 48) for the reception of a group of packages, is brought into a position adjacent to the transfer channel (24, 32), in that the transfer channel is moved into a position lying beside and parallel with the channel section in which the package are guided into the channel section of the conveyor carrier, and in that the packages are next driven with the aid of the conveyor carrier into a desired target position.

2. An apparatus for carrying out the method according to Claim 1, with an inclined collecting channel (14), pivotable into a horizontal position, for the reception of yarn packages (16) from an automatic spinning machine or the like and with a raisable and lowerable transfer channel (24, 32) for the transference of the packages from the collecting channel into a reception and transport means characterised in that as reception and transport device there are provided mobile conveyor carriers (22) of a suspended convoyor and in that the transfer channel (24, 32) is pivotable about a vertical axis (34) and/or movable in a horizontal direction.

3. An apparatus according to Claim 2, characterised in that the transfer channel (24, 32) is fitted adjustable in height and pivotably about a vertical axis (34) lying on one end of the channel on a movable chassis (36) having a vertical mast.

4. An apparatus according to Claim 2 or 3, characterised in that the transfer channel (24, 32) is tiltable about an axis (68) extending parallel with its longitudinal direction.

5. An apparatus according to any one of Claims 2 to 4, characterised in that the transfer channel (24, 32) comprises means for the longitudinal displacement of the package for the achievement of predetermined inter-package distances.

6. An apparatus according to any one of Claims 2 to 5, characterised in that the conveyor carriers (22) comprise a plurality of channel sections (44, 46, 48) extending in their longitudinal direction and lying one above the other, which sections are suspended at their ends on vertical frames (42).

7. An apparatus according to Claim 6, characterised in that the forward and rearward frames (42) of the conveyor carriers (22) are connected at their upper ends with rollers (60) for support on rails (18) of a suspended conveyor system.

8. An apparatus according to Claim 7, characterised in that the channel sections (44, 46, 48) are pivotably connected with the vertical frames (42) by horizontal spindles directed transversely of the running directions, and have adjustable retaining plates (56) at the ends.

9. An apparatus according to any one of Claims 6 to 8, characterised in that the channel sections (44, 46, 48) are formed by lateral rods (50, 52) and cloths (54) arranged hanging through between these rods.

10. An apparatus according to any one of Claims 7 to 9, characterised in that between the rollers (60) for the one part and the upper ends of the vertical frames (42) for the other part there are arranged longitudinal girders (86, 90) which are rotatably connected in their middle region by a vertical spindle (92).

## Revendications

1. Procédé pour le transport et le stockage de bobines, en particulier pour l'alimentation de dispositifs automatiques de filage ou analogues, dans lequel les bobines sont reçues et rassemblées dans une goulotte collectrice inclinée (14) sur une bande transporteuse (12), puis amenées en situation horizontale par pivotement de la goulotte collectrice et poussées par groupes à partir de la goulotte collectrice dans une goulotte de transfert (24, 32), caractérisé en ce qu'un support de transport déplaçable (22), qui comporte au moins un tronçon de goulotte (44, 46, 48) servant à recevoir un groupe de bobines, est amené dans une position voisine de la goulotte de transfert (24, 32), en ce que la goulotte de transfert est amenée dans une position située à côté de la partie de goulotte et parallèlement à celle-ci, et dans laquelle les bobines sont amenées dans le tronçon de goulotte du support de transport, et en ce qu'ensuite les bobines sont déplacées pour arriver, à l'aide du support de transport, dans la position finale souhaitée.

2. Dispositif pour la mise en oeuvre du procédé selon la revendication 1, comprenant une goulotte collectrice inclinée (14), pouvant pivoter dans une position horizontale pour recevoir des bobines (16) d'un dispositif automatique de filage ou analogue et une goulotte de transfert (24, 32) pouvant être soulevée et abaissée pour le transfert des bobines de la goulotte collectrice dans un dispositif de réception et de transport, caractérisé en ce que, comme dispositifs de réception et de transport, il est prévu des supports de transport déplaçables (22) d'un transporteur suspendu et en ce que la goulotte de transfert (24, 32) peut pivoter autour d'un axe vertical (34) et/ou est déplaçable dans le sens horizontal.

3. Dispositif selon la revendication 2, caractérisé en ce que la goulotte de transfert (24, 32) est décalable en hauteur sur un châssis mobile (36) comportant un mât vertical et est montée pivotante autour d'un axe vertical (34) se trouvant à une extrémité de la goulotte.

4. Dispositif selon la revendication 2 ou 3, caractérisé en ce que la goulotte de transfert (24, 32) peut basculer autour d'un axe (68) parallèle à sa direction longitudinale.

5. Dispositif selon l'une des revendications 2 à 4, caractérisé en ce que la goulotte de transfert (24, 32) comporte des dispositifs pour le déplacement longitudinal des bobines afin d'obtenir des distances préfixées d'écartement des bobines.

6. Dispositif selon l'une des revendications 2 à 5, caractérisé en ce que les supports de transport (22) comportent plusieurs tronçons de goulotte (44, 46, 48) situés les uns au-dessus des autres et dirigés dans leur direction longitudinale, lesquels sont suspendus à leurs extrémités à des cadres verticaux (42).

7. Dispositif selon la revendication 6, caractérisé en ce que les cadres avant et arrière (42) des supports (22) sont reliés, à leur extrémités supérieures, à des galets de roulement (60) pour soutenir sur des rails (18) un système transporteur suspendu.

8. Dispositif selon la revendication 7, caractérisé en ce que les tronçons de goulotte (44, 46, 48) sont reliés avec pivotement possible aux cadres verticaux (42) par des axes horizontaux, dirigés tranversalement par rapport à la direction de circulation et comportent aux extrémités des plaques de maintien déplaçables (56).

9. Dispositif selon l'une des revendications 6 à 8, caractérisé en ce que les tronçons de goulotte (44, 46, 48) sont formées par des tiges latérales (50, 52) et des pièces de toile (54) disposées entre celles-ci en étant détendues.

10. Dispositif selon l'une des revendications 7 à 9, caractérisé en ce qu'entre les galets de roulement (60) d'une part et les extrémités supérieures des cadres verticaux (42) d'autre part, sont disposés des supports longitudinaux (86, 90), qui sont reliés avec possibilité de rotation dans leur région moyenne par un axe vertical (92).

*Fig. 1*

## Fig. 2

*Fig. 3*

Fig. 4

Fig. 5

*Fig. 6*

*Fig. 7*

*Fig. 8*

18    58

78

16    22

44    80    42

46    82

74

48    84

0 198 260

Fig. 9

Fig. 10

Fig. 11

*Fig. 12*

*Fig. 13*

Fig. 14

*Fig. 15*

Fig. 16

Fig. 17

100

100

22

24

*Fig. 18*

Fig. 19

16

22

102

Fig. 20

Fig. 21

0 198 260

49

Fig. 22

118

122

120

126

128

124

Fig. 23

*Fig. 24*

Fig. 25